# EUROPEAN PATENT APPLICATION

(11) **EP 1 913 814 A2**
(43) Date of publication of application: **23.04.2008**
(21) Application number: 07111011.8
(22) Date of filing: 26.06.2007
(51) Int. Cl.: A01N 25/08, A01N 53/06, A01P 7/04

(54) **A solid insecticide compound**

(30) Priority: 16.10.2006 IT RE20060121
(71) Applicant: RE.LE.VI. S.p.a., 46040 Rodigo (Mantova) (IT)
(72) Inventor: Pagani, Fabio, 46040, RODIGO (MANTOVA) (IT)
(74) Representative: Corradini, Corrado

(57) **Abstract**

A solid insecticide compound, in particular a moth-killer, comprising:
- a liquid biocide substance having a moth-killing action, in
- a quantity comprised between 0.001% and 5% weight, the biocide substance being soaked in an inert powder substance constituted by an inorganic inert material chosen from among borax, magnesium sulphate and sodium chloride, in a quantity comprised between 30% and 99% weight;
- a plasticiser for giving plasticity to the compound, in a quantity comprised between 0.01 % and 40% weight;
- a wetting substance for uniformly dispersing the substance in the liquid phase into the substance in the solid phase.

## Description

The invention relates to a solid insecticide compound having a moth-killing function.

As is known, sublimating solid substances have moth-killing properties are widely used.

Amongst the moth-killers in widest use are camphor, naphthalene, paradichlorobenzene and isoborneole. These substances have the advantage of diffusing biocidal vapours with a moth-killing effect into the environment in a controlled way, i.e. the sublimation time is such as to guarantee an effective continuous action against moths, without being subject to a rapid consumption of the substance itself.

Unfortunately the above-mentioned solid sublimating chemical substances exhibit some drawbacks, as they exhibit a certain degree of toxicity to humans.

For this reason new main active ingredients have been developed, which can still perform an efficient moth-killing action while considerably reducing the toxicity level to humans.

These more recent active ingredients are in liquid phase and therefore require special containers and diffusers in order to enable them to be used in wardrobes, drawers, cupboards etc.

To this end the market today offers progressively more pastilles based on inert solids drenched with a liquid chemical substance having a specific moth-killing action, which is released over time into the surrounding environment.

The effectiveness of these prior-art pastilles is often limited over time and, furthermore, the release of the moth-killing vapours is not always constant over the whole time they are used for.

There is therefore a need for a solid insecticide compound having low toxicity for humans, which releases its biocide substance constantly over the whole useful life thereof, and which has an adequate useful life, such that biocide pastilles can be produced which weigh no more than a few grams.

The aim of the present invention is to provide a solid insecticide compound having characteristics such as to satisfy the above-mentioned requirements and to obviate the drawbacks mentioned with reference to the prior art.

This aim is attained by the solid insecticide compound described in appended claim 1.

The dependent claims delineate particularly advantageous preferred embodiments of the composition of the invention.

Further characteristics and advantages of the invention will better emerge from a reading of the following description, which is provided by way of non-limiting example.

In the present invention, the moth-killing insecticide compound comprises, as the main active ingredient, a liquid biocide substance with insecticide action contained within an inert substance in powder form having the function of carrier.

The inert powder substance is constituted by an inert inorganic substance chosen from among borax, magnesium sulphate and sodium chloride, which last can be either sea or mineral salt, in a quantity comprised between 30% and 99% weight of the total compound.

The biocide substance is present in the total compound in a quantity comprised between 0.001 % and 5% of total weight.

In a preferred embodiment of the present invention, the liquid substance is chosen from among insecticides belonging to the pyrethroid family, and more especially from among transfluthrin (CAS 118712-89-3), empenthrin (CAS 54406-48-3), permethrin (CAS 52645-53-1), phenothrin (CAS 26002-80-2) and bioalethrin (CAS 584-79-2).

To give greater plasticity to the final compound, and to uniformly disperse the liquid substances in the powders, the following are added: a plasticiser in the form of powders or scales, in a quantity comprised between 0.01% and 40% of total weight, and a wetting substance in a quantity comprised between 0.01% and 10% of total weight.

In particular, the plasticiser can be chosen from among microcellulose, PEG 2000-8000, betonite, coconut monoethanolamide and stearic amide, talc, while the wetting substance can be selected from among water, glycol, high-molecular weight alcohols (with C>12 atoms).

To give a pleasant smell to the vapours of the biocide substance which are emanated, perfume is added to the compound at a quantity comprised between 0.001 % and 10% in weight of the total.

The final solid compound is obtained by mixing together the liquid biocide active ingredient with the inert organic powder, the plasticiser and the wetting substance, as well as the perfume, if included.

The composition is easily reduced to pills, pastilles, cubes, balls etc., generally of a weight comprised between 5 and 75 grams, after subjection to compression.

In the present invention, the physical phases of the materials relate to normal temperature and pressure conditions in the domestic environment.

The moth-killing action has a duration that varies according to the active ingredient used, the volume and the form chosen for the product.

For example, the following is a formula for producing an insecticide compound according to the present invention.

| Substance | % weight |
|---|---|
| Magnesium sulphate | 85.80 |
| Talc | 1.00 |
| Coconut monoethanolamide | 2.50 |
| Microcellulose | 3.00 |
| Bentonite | 6.00 |
| Transfluthrin | 0.05 |
| Technical glycerine | 0.60 |
| Water | 0.40 |
| Perfume | 0.65 |

Producing pastilles of about 6g weight, with the composition as described above in the example, it has been found that the pastilles function as moth-killers over a duration of four months.

In particular, tests have been conducted in which a pastille weighing 6.2 grams having the above-described composition was placed in a wardrobe having an area of about one cubic metre. Subsequently, and at regular intervals, a hundred adult moths were placed in the wardrobe. It was noted that the moths died within 24 hours. This also occurred with moths placed in the wardrobe after the active ingredient of the pastille was left to evaporate for four consecutive months, as a demonstration of the long effective life of the pastille. Further, no moths laid eggs in the 24 hours of exposure to the pastille.

The following are tables explaining in detail the rate of mortality among 105 adult moths after a certain number of hours of exposure to the vapours of a pastille having the above-reported composition and placed in a wardrobe having an area of about one cubic metre.

After one month:

| Exposure time | 1 h | | | 4h | | | 24h | | |
|---|---|---|---|---|---|---|---|---|---|
| | D | A | %M | D | A | %M | D | A | %M |
| Moth-killer pastille with 0.05 % transfluthrin | 105 | 0 | 100 | | | | | | |

After two months:

| Exposure time | 1 h | | | 4h | | | 24h | | |
|---|---|---|---|---|---|---|---|---|---|
| | D | A | %M | D | A | %M | D | A | %M |
| Moth-killer pastille with 0.05 % transfluthrin | 105 | 0 | 100 | | | | | | |

After three months

| Exposure time | 1 h | | | 4h | | | 24h | | |
|---|---|---|---|---|---|---|---|---|---|
| | D | A | %M | D | A | %M | D | A | %M |
| Moth-killer pastille with 0.05 % transfluthrin | 0 | 105 | 0 | 76 | 29 | 72 | 105 | 0 | 100 |

After four months

| Exposure time | 1 h | | | 4h | | | 24h | | |
|---|---|---|---|---|---|---|---|---|---|
| | D | A | %M | D | A | %M | D | A | %M |
| Moth-killer pastille with 0.05 % transfluthrin | 0 | 105 | 0 | 15 | 90 | 14 | 105 | 0 | 100 |

Where D = number dead; A = number alive; %M = % mortality

As can be appreciated from the above description, the solid insecticide compound of the present invention satisfies the requirements and obviates the drawbacks mentioned in the introductory part of the present description, with reference to the prior art.

Obviously an expert in the field, in order to satisfy contingent and specific requirements, might make numerous changes and variations to the sublimating solid insecticide compound of the invention, without its forsaking the ambit of protection as defined in the claims that follow.

## Claims

1. A solid insecticide compound, in particular a moth-killer, comprising:
- a liquid biocide substance having a moth-killing action, in a quantity comprised between 0.001% and 5% weight, the biocide substance being soaked in
- an inert powder substance constituted by an inorganic inert material chosen from among borax, magnesium sulphate and sodium chloride, in a quantity comprised between 30% and 99% weight;
- a plasticiser for giving plasticity to the compound, in a quantity comprised between 0.01 % and 40% weight;
- a wetting substance for uniformly dispersing the substance in the liquid phase into the substance in the solid phase.

2. The compound of claim 1, wherein the biocide substance is a pyrethroid insecticide.

3. The compound of claim 2, wherein the insecticide is chosen from among transfluthrin, empenthrin, permethrin, phenothrin and bioallethrin.

4. The compound of claim 1, wherein the plasticiser is chosen from among microcellulose, PEG 2000-8000, bentonite, coconut monoethanolamide, stearic amide and talc.

5. The compound of claim 1, wherein the wetting substance is chosen from among water, glycols, high-molecular-weight alcohols.

6. The compound of claim 1, further comprising a perfumed substance in a quantity comprised between 0.001 % and 10% weight.

7. The compound of claim 1, further comprising a colouring agent in a quantity comprised between 0.05% and 0.5% weight.

8. A solid preparation in pastille form having a regular geometric conformation constituted by a composition according to any one of the preceding claims.

9. The preparation of claim 8, conformed in pastilles having a weight of between 5g and 75g comprising transfluthrin 0.05, magnesium sulphate 85.50, perfume 0.65, bentonite 6, coconut monoethanolamide 2.5, microcellulose 3.0, water 0.4, technical glycerine 0.6, talc 1.00, the values being expressed in terms of percentage weight.
